# EUROPEAN PATENT SPECIFICATION

(11) **EP 2 459 944 B1**
(45) Date of publication and mention of the grant of the patent: **05.09.2018**
(21) Application number: 09781141.8
(22) Date of filing: 27.07.2009
(51) Int. Cl.: F25B 29/00, F25B 49/02

(54) **METHOD AND DEVICE FOR HEAT RECOVERY ON A VAPOUR REFRIGERATION SYSTEM**
VERFAHREN UND VORRICHTUNG ZUR WÄRMERÜCKGEWINNUNG BEI EINEM DAMPFKÜHLUNGSSYSTEM
PROCÉDÉ ET DISPOSITIF DE RÉCUPÉRATION DE CHALEUR SUR UN SYSTÈME FRIGORIFIQUE À COMPRESSION DE VAPEUR

(43) Date of publication of application: 06.06.2012
(73) Proprietor: Ecolactis, 21380 Messigny et Vantoux (FR)
(72) Inventor: DECAESTECKER, Laurent, 21380 Messigny et Vantoux (FR)
(74) Representative: Gevers & Orès
(86) International application number: PCT/EP2009/059685
(87) International publication number: WO 2011/012153

(56) References cited:
- EP-A1- 0 058 259
- EP-A1- 1 162 419
- EP-A2- 1 826 510
- WO-A1-03/074953
- WO-A1-2009/006794
- FR-A1- 2 370 424
- GB-A- 1 587 057
- GB-A- 2 102 551
- JP-A- 2002 081 768
- US-A- 2 702 671
- US-A- 3 513 663
- US-A1- 2008 184 724

## Description

### FIELD OF THE INVENTION

The invention relates in general to a method and a device for heat recovery on a vapour compression system. Said method and device will be particularly useful for bulk milk coolers on farms.

### BACKGROUND OF THE INVENTION

It is well known vapour compression refrigeration system including at least a first piping closed refrigerating circuit in which a refrigerant fluid circulates, a compressor, an evaporator, an expansion valve, a condenser, wherein the refrigerant fluid is entered in a vapour saturated state into the compressor, the refrigerant fluid is compressed to a higher pressure resulting in a higher temperature, in such a way that the refrigerant fluid is in a superheated vapour state, then the refrigerant fluid is cooled and condensed in superheated vapour state into a saturated liquid by passing it through the condenser, then the saturated liquid is passed through the expansion valve to reduce abruptly the pressure providing a flash evaporation that lowers the liquid and vapour refrigerant's temperature, and finally the liquid and vapour refrigerant is passed through the evaporator to extract the heat from a hot source such a tank for example.

Moreover, in many applications, there is a need for refrigeration and/or air conditioning requirement and a need for hot water.

Usually, the refrigeration system is operated totally separate from the hot water system with the result that the heat removed in the condensing process of the refrigeration system is wasted, while the water in the hot water system is heated by means of an external energy source such as electricity.

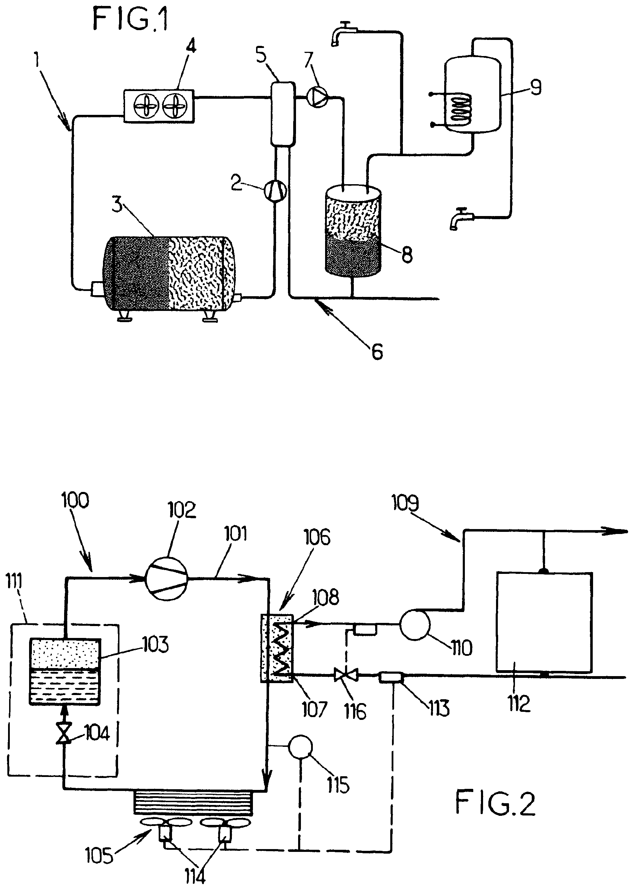

To overcome this drawback, various devices for heat recovery on a vapour compression refrigeration system allowing producing hot water are already known. Such devices for bulk milk coolers on farms, for example, include usually, referring to figure 1, at least a first piping closed refrigerating circuit 1 in which a refrigerant fluid circulates, a compressor 2, a cooling tank 3 comprising an evaporator and an expansion valve, a condenser 4 and a heat recovery unit 5 including a water inlet and a water outlet respectively connected to a second piping circuit 6 comprising a circulating pump 7, a storage tank 8 and an electrical heater 9. It should be noted that the electrical heater 9 can be embedded in the storage tank 8.

For example, the patent US 4,041,726 has already disclosed a method and a device wherein the water is heated by transferring the superheat, heat of condensation and a part of the liquid refrigerant's sensible heat in a uniquely designed heat exchanger. The heated water then circulates by convection, when the water reaches a selected temperature, into a hot water storage tank where the water remains stratified with the hot water at the top of the tank and the colder water at the bottom. The tank may fill completely with hot water at the selected temperature.

Nevertheless, even if it allows heat recovery, this method and device has several drawbacks. Firstly, the condensing temperature is constantly on a high level thus resulting globally in high electricity consumption and low cooling performance. Secondly, the production of hot water is independent from the requirement and the excess heated water is wasted.

Moreover, the German patent application DE3512748 discloses a device for the connection of a refrigeration unit to a heat recovery installation using a thermostat-controlled three-way valve. Said device includes a first piping closed refrigerating circuit in which a refrigerant fluid circulates, a compressor, an evaporator, an expansion valve, an air cooled condenser and a three way-valve connecting said first piping circuit to a heat recovery unit including a water inlet and a water outlet respectively connected to a second piping circuit including a circulating pump and a heat exchanger comprised in a water tank. The condensing temperature is regulated by a thermostatically controlled head of the three-way valve, said thermostatically controlled head being connected to the heat temperature sensor arranged in the hot water tank and/or on the refrigerant circuit piping. The condenser is automatically called upon continuously to a greater or lesser extent for carrying off any excess condensation heat, as soon as an adjustable temperature limit is exceeded at the detector points. The refrigeration compressor of the refrigeration unit is always operated below an upper loading limit. The condensing temperature is always maintained below an upper limit enabling heat recovery.

Nevertheless, even if it allows heat recovery, this method and device has several drawbacks. The condensing temperature is constantly maintained below an upper limit necessarily set on a high level to enable heat recovery thus resulting globally in high electricity consumption and low cooling performance. The condenser fan is working continuously even when the condenser is by-passed thus resulting in useless electricity consumption. This device utilises regulation means that are not standard refrigeration components and requires complex piping installation. EP1826510A2 discloses a refrigeration cycle device in which heat generated by heat absorption of an evaporator is used for heating in a condenser, a disadvantage that a cooling capacity of the evaporator deteriorates owing to shortage or drop of an amount of the heat to be rejected from the condenser is securely avoided and a cooling function is maintained.; In the refrigeration cycle device which is provided with a refrigerant circuit including a compressor, a condenser, an expansion valve and an evaporator and which exhibits a heating function by the heat rejected from the condenser and which exhibits the cooling function by the heat absorption of the evaporator, an operation to secure a predetermined amount of the heat to be rejected from the condenser is executed in order to maintain the cooling function of the evaporator based on an index capable of grasping the amount of the heat to be rejected from the condenser. To overcome above-mentioned limitation, a need exists for a method and a device providing an optimized heat recovery and a lower electricity consumption of the refrigeration unit together with higher cooling performances.

### SUMMARY OF THE INVENTION

It is therefore an object of the invention to provide a method for heat recovery on a vapour compression refrigeration system allowing to produce hot water, said refrigeration unit including at least a first piping closed refrigerating circuit in which a refrigerant fluid circulates, a compressor, an evaporator, an expansion valve, a condenser and/or a heat recovery unit including a water inlet and a water outlet respectively connected to a second piping circuit including a circulating pump, said method comprising at least the steps of entering the refrigerant fluid in a vapour saturated state into the compressor, compressing the refrigerant fluid to a higher pressure resulting in a higher temperature, in such a way that the refrigerant fluid is in a superheated vapour state, cooling and condensing the refrigerant fluid in superheated vapour state into a saturated liquid by passing it through the condenser and/or heat recovery unit, passing the saturated liquid through the expansion valve to reduce abruptly the pressure providing a flash evaporation that lowers the liquid and vapour refrigerant's temperature, passing the liquid and vapour refrigerant through the evaporator to extract the heat from a hot source ; said method is remarkable in that it comprises at least the following steps of determining at least one physical unit of the refrigerant fluid and/or water of the second piping circuit, and when said physical unit is lower than a predetermined threshold, the condensing temperature is increased, and when said physical unit is greater than said predetermined threshold the condensing temperature is decreased to a minimum value.

The condensing temperature is increased to a level enabling the transfer of the latent heat of condensation to the water i.e., if the water is heated to 55°C, the condensing temperature will be in the range of 50°C.

The condensing temperature is decreased to a minimum value enabled by the condenser and its operating conditions i.e.:
- On a system with air cooled condenser, if the ambient temperature is 20°C, the condensing temperature will be in the range of 38°C.
- On a system with water cooled condenser, if the water temperature is 12°C, the condensing temperature will be in the range of 25°C.

Said physical unit is the water temperature at the second water piping circuit.

Alternatively, said physical unit is the refrigerant fluid's temperature.

In another embodiment, said physical unit is the refrigerant fluid's pressure.

Moreover, the threshold is a water temperature at the second piping circuit comprised between 30 and 40°C and preferably the threshold is a water temperature at the second piping circuit equal to 35°C.

Preferably, when said physical unit is lower than predetermined threshold, the hot water flow rate at the outlet of the heat recovery unit is regulated in such a manner that the water temperature at its outlet reaches a determined value or in such a manner that the refrigerant fluid temperature/pressure reaches a determined value.

In one embodiment, the condensing temperature is increased by deactivating the condenser.

When said physical unit is greater than said predetermined threshold the condensing temperature is decreased to a minimum value and the condensing temperature is maintained to a minimum value in function of at least one parameter even if said physical unit becomes lower than said predetermined threshold.

The condensing temperature is maintained to a minimum value during a predetermined time even if said physical unit becomes lower than said predetermined threshold.

The method further comprises the following steps of measuring refrigerant fluid's pressure between the compressor and the expansion valve, and when said refrigerant fluid's pressure is greater than a predetermined value, the condensing temperature is decreased to a minimum value whatever said physical unit is greater or lower than said predetermined threshold.

Another object of the invention relates to a device for heat recovery on a vapour compression refrigeration system allowing to produce hot water, said refrigeration unit including at least a first piping closed refrigerating circuit in which a refrigerant fluid circulates, a compressor, an evaporator, an expansion valve, a condenser and/or a heat recovery unit including a water inlet and a water outlet respectively connected to a second piping circuit comprising a circulating pump ; said device is remarkable in that it comprises at least means for determining at least one physical unit of the refrigerant fluid and/or water of the second piping circuit, means for increasing condensing temperature when said physical unit is lower than a predetermined threshold, and means for decreasing the condensing temperature to a minimum value when said physical unit is greater than said predetermined threshold.

Means for determining said physical unit is a thermostat positioned at the low temperature area of the second piping circuit.

Alternatively, means for determining said physical unit is a thermostat positioned at the first piping circuit between the compressor and the expansion valve.

In another embodiment, means for determining said physical unit is a pressure switch positioned at the first piping circuit between the compressor and the expansion valve.

Moreover, the threshold is a water temperature at the low temperature area of the second piping circuit comprised between 30 and 40°C, and preferably the threshold is a water temperature at the low temperature area of the second piping circuit equal to 35°C.

Preferably, it comprises means for regulating the hot water flow rate at the outlet of the heat recovery unit in such a manner that the water temperature at its outlet reaches a determined value or in such a manner that the refrigerant fluid temperature/pressure reaches a determined value when said physical unit is lower than predetermined threshold.

Furthermore, means for increasing and/or decreasing condensing temperature is a switch for activating/deactivating the condenser.

The device further comprises means for decreasing the condensing temperature to a minimum value when said physical unit is greater than said predetermined threshold and for holding the condensing temperature to a minimum value in function of at least one parameter even if said physical unit becomes lower than said predetermined threshold.

Said means is a thermostat including a timer unit positioned at the low temperature area of the second piping circuit to maintain the condensing temperature to a minimum value during a predetermined time even if the water temperature becomes lower than said predetermined threshold.

Advantageously said device further comprises security means including a pressure switch positioned between the compressor and the expansion valve and activating/deactivating the condenser.

Preferably, the second piping circuit comprises a preheated water tank.

In one embodiment, the condenser is an air cooled condenser including motor driven fan(s) connected to means for increasing/decreasing the condensing temperature.

In another embodiment, the condenser is a water cooled condenser including a water inlet and a water outlet respectively connected to a third piping circuit comprising a solenoid valve connected to means for increasing/decreasing the condensing temperature.

Advantageously, the outlet of the third piping circuit feeds at least one drinking trough.

The device may further comprises an additional water condenser including a water inlet and a water outlet respectively connected to a heating piping circuit comprising a circulating pump piloted by the means for increasing/decreasing the condensing temperature, a heat exchanger wherein a thermostat activating/deactivating the condenser is positioned at the low temperature part of the heating piping circuit.

Said heating piping circuit comprises advantageously a buffering hot water tank.

Moreover, the outlet pipe of the second piping circuit comprises a derivative pipe including a solenoid valve connected to the means for increasing/decreasing the condensing temperature and feeding at least one drinking trough and that the incoming pipe of the second piping circuit comprises a by pass circuit including a pressostatic valve.

Furthermore, the incoming pipe of the second piping circuit may comprise a filter and a by pass circuit, said by-pass circuit including a second filter and a solenoid valve connected to the pressure switch.

Accessorily, the condenser and/or the heat recovery unit is embedded in the preheated water tank.

Accessorily, the device further comprises a pressure regulating valve between the heat recovery unit and the condenser and a by-pass piping circuit including a solenoid valve piloted by the thermostat.

In another embodiment, if the refrigerant fluid utilised has a low exhaust temperature, it further comprises means for deactivating the circulating pump when said physical unit is greater than said predetermined threshold.

It should be noted that "a refrigerant fluid having a low exhaust temperature" means a refrigerant fluid having an exhaust temperature below 55°C when the condensing temperature is at its minimal value i.e. R404A refrigerant fluid, according to the American norm ANSI/ASHRAE 34 published in 2001 "Designation and Safety Classification of Refrigerants".

### BRIEF DESCRIPTION OF THE DRAWINGS

For a further understanding of the objects and advantages of the present invention, references should be made to the following drawings in conjunction with the accompanying descriptions and operations, wherein:
- Figure 1 shows a schematic representation of a device of prior art,
- Figure 2 shows a schematic representation of a first embodiment of the device according to the invention,
- Figure 3 and 4 show a schematic representation of the first embodiment's operation of the device according to the invention during the heating of the water of the second piping circuit,
- Figure 5 shows a schematic representation of the first embodiment's operation of the device according to the invention when the water has been heated,
- Figure 6 shows a schematic representation of a second embodiment of the device according to the invention,
- Figures 7 and 8 show a schematic representation of the second embodiment's operation of the device according to the invention during the heating of the water of the second piping circuit,
- Figure 9 shows a schematic representation of the second embodiment's operation of the device according to the invention when the water has been heated,
- Figure 10 shows a schematic representation of a third embodiment of the device according to the invention,
- Figures 11 and 12 show a schematic representation of the third embodiment's operation of the device according to the invention during the heating of the water of the second piping circuit,
- Figure 13 shows a schematic representation of another embodiment of the device according to the invention,
- Figure 14 shows a schematic representation of yet another embodiment of the device according to the invention.

### DETAILED DESCRIPTION OF EMBODIEMENTS

It is emphasized that, in accordance with the standard practice in the industry, various features are not drawn to scale. In fact, the dimensions of the various features may be arbitrarily increased or reduced for clarity of discussion.

For the purpose of promoting an understanding of the present invention, references are made in the text hereof to embodiments of a device for heat recovery on a vapour compression refrigeration system of a bulk milk cooler. It is nevertheless understood that no limitations to the scope of the invention are thereby intended.

Furthermore, in the embodiments depicted, like reference numerals refer to identical structural elements in the various drawings.

Referring to figure 2, the device according to the invention comprises a refrigeration unit 100 including at least a first piping closed refrigerating circuit 101 in which a refrigerant fluid circulates, a compressor 102, an evaporator 103, an expansion valve 104, an air cooled condenser 105 and a heat recovery unit 106 including a water inlet 107 and a water outlet 108 respectively connected to a second piping circuit 109 comprising a circulating pump 110. The evaporator 103 and the expansion valve 104 are embedded in a milk cooling tank 111 which is progressively filled up during cows milking. The hot milk collected in the milk cooling tank 111 is cooled and maintained to a low temperature to avoid any bacterial growth.

Moreover, the second piping circuit 109 comprises a preheated water tank 112 and a thermostat 113, preferably including a timer unit, positioned at the low temperature area of the second piping circuit 109, i.e. between the bottom part of the preheated water tank 112 and the inlet of the heat recovery unit 106. Said thermostat 113 is connected to the motor driven fans 114 of the air cooled condenser 105 to increase/decrease the condensing temperature as it will be depicted hereinafter.

Accessorily, the device comprises security means including a pressure switch 115 positioned between the compressor 102 and the expansion valve 104. Said pressure switch 115 is connected to the motor driven fans 114 of the air cooled condenser 5 in such a manner that the air cooled condenser 105 is activated when the condensing temperature is higher than a security threshold i.e. the motor driven fans 114 are turned on.

Furthermore, said second piping circuit 109 comprises a thermostatic valve 116 that regulates the water flow in such a manner that its temperature at the water outlet 108 is maintained at a predetermined value.

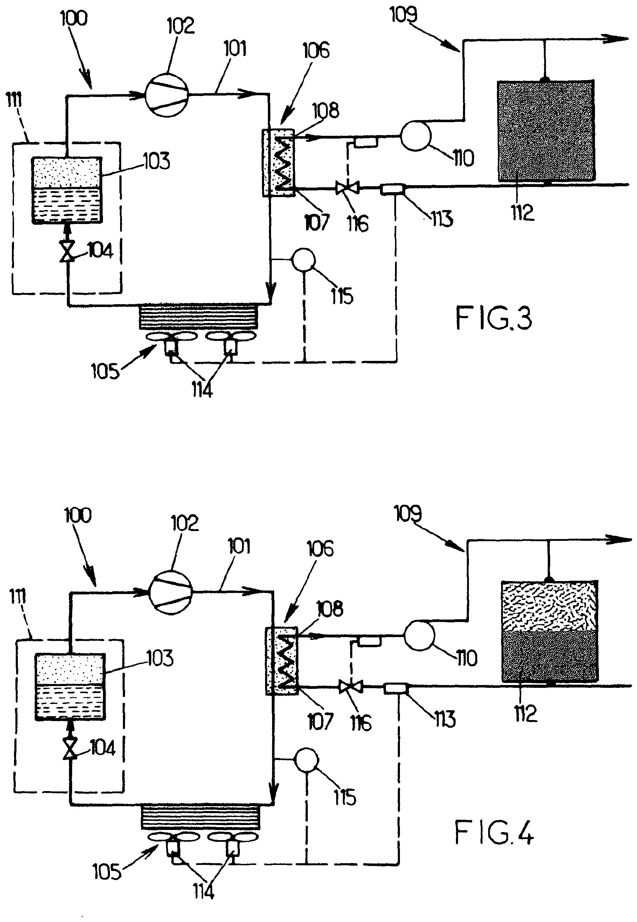

Referring to figure 3, the preheated water tank 112 is filled with a cold water, i.e. the temperature of the water is comprised between 10°C and 18°C which is the temperature of the tap water. When the milk cooling tank 111 needs cold, the compressor 102 is activated. The circulating pump 110 provides a circulation of the water in the second piping circuit between the preheated water tank 112 and the heat recovery unit 106. The water temperature in the second piping circuit 109, measured by the thermostat 113, being lower than a predetermined value, 35°C for example, the air cooled condenser 105 is deactivated by turning off the motor driven fans.

Referring to figure 4, the thermostatic valve 116 regulates advantageously the hot water flow rate at the outlet 108 of the heat recovery unit 106 in such a manner that the water temperature at its outlet reaches a determined value. The condensing temperature and the condensing pressure increase and the refrigerant fluid circulating in the first piping circuit 101 transfers its heat to the water of the second piping circuit through the heat recovery unit 106 during the desuperheat phase and its condensing latent heat. It should be noted that by turning off the motor driven fans 114 of the air cooled condenser, the condensing temperature is increased to a high condensing temperature. Nevertheless, if the condensing temperature reaches a security threshold, the pressure switch 115 activates the air cooled condenser 105 by turning on the motor driven fans 114. The activation of the air cooled condenser 105 will decrease the condensing temperature to avoid any deterioration of the refrigeration unit 100. It should be noted that the security threshold will depend on the technical characteristics of the refrigeration unit 100 and the type of refrigerant fluid.

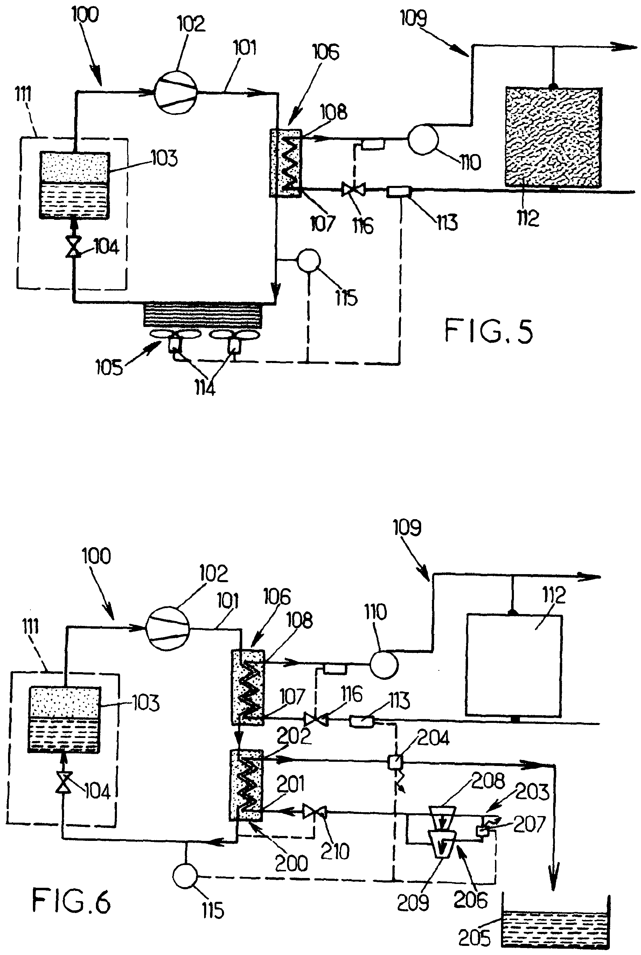

Referring to figure 5, when the temperature of the water filled in the preheated water tank 112 does not provide condensation in the heat recovery unit 106, i.e. when the water reaches a temperature equal to the threshold, about 35°C for example, the thermostat 113 activates the air cooled condenser 105 by turning on the driven motor fans 114. In this way, the condensing temperature decreases to a minimum value increasing the cooling efficiency and decreasing the power consumption. For a refrigerant fluid having a high exhaust temperature, such as refrigerant fluid R22 according to the American norm ANSI/ASHRAE 34 published in 2001 "Designation and Safety Classification of Refrigerants", the heat recovery unit 106 provides both the desuperheating of gas and the heating of the water in the preheated water tank 112. For a refrigerant fluid having a low exhaust temperature, such as refrigerant fluid R404A according to the American norm ANSI/ASHRAE 34 published in 2001 "Designation and Safety Classification of Refrigerants", the circulating pump 110 is deactivated because the exhaust temperature of the refrigerant fluid does not allow the heating of the water of the preheated tank 112 anymore. When hot water is drawn off the preheated water tank 112, cold water is introduced in the preheated water tank 112 lowering the water temperature in the second piping circuit 109. Even if, the water temperature is lower than the predetermined threshold, the thermostat 113 will not deactivate the air cooled condenser 105 by turning off the motor driven fans 114 until a predetermined duration.

In a second embodiment, referring to figure 6, the device according to the invention comprises a refrigeration unit 100 including at least a first piping closed refrigerating circuit 101 in which a refrigerant fluid circulates, a compressor 102, an evaporator 103, an expansion valve 104 and a heat recovery unit 106 including a water inlet 107 and a water outlet 108 respectively connected to a second piping circuit 109 comprising a circulating pump 110. The evaporator 103 and the expansion valve 104 are embedded in a milk cooling tank 111 which is progressively filled up during cows milking.

This embodiment can be distinguished from the preceding by the fact that the air cooled condenser had been substituted by a water cooled condenser 200 including a water inlet 201 and a water outlet 202 respectively connected to a third piping circuit 203. Said third piping circuit 203 comprises a solenoid valve 204 positioned at the outlet pipe of the third piping circuit 203, the outlet of the third piping circuit feeding advantageously at least one drinking trough 205. The inlet pipe of the third piping circuit 203 comprises a by-pass 206 including a solenoid valve 207, each branch of the by-pass comprising a filter 208 and respectively 209, and a pressostatic valve 210 suitable to regulate the water flow rate in the water condenser maintaining a low condensing temperature while regulating the outlet water temperature as it will be explained hereinafter.

Moreover, the second piping circuit 109 comprises a preheated water tank 112 and a thermostat 113, preferably including a timer unit, positioned at the low temperature area of the second piping circuit 109, i.e. between the bottom part of the preheated water tank 112 and the inlet of the heat recovery unit 106. Said thermostat 113 is connected to the solenoid valve 204 of the third piping circuit 203 to increase/decrease the condensing temperature as it will be depicted hereinafter.

Accessorily, the device comprises security means including a pressure switch 115 positioned between the compressor 102 and the expansion valve 104. Said pressure switch 115 is connected to the solenoid valve 207 of the by-bass 206 and to the solenoid valve 204 of the third piping circuit 203 in such a manner that the water condenser 200 is activated and the filter 208 is by-passed when the condensing temperature is higher than a security threshold.

Furthermore, said second piping circuit 109 comprises a thermostatic valve 116. that regulates the water flow in such a manner that its temperature at the water outlet 108 is maintained at a predetermined value.

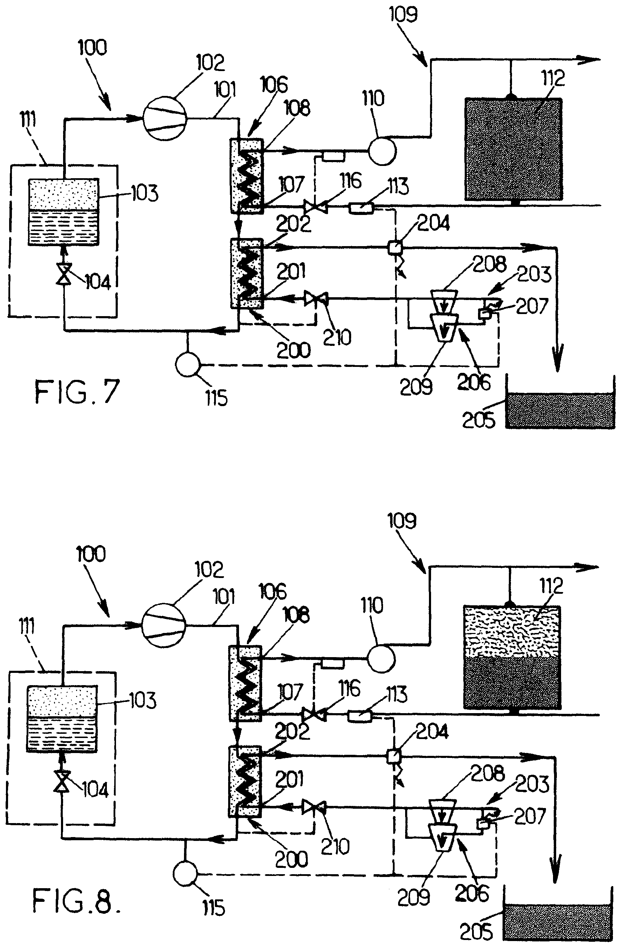

Referring to figure 7, the preheated water tank 112 is filled with a cold water, i.e. the temperature of the water is comprised between 10°C and 18°C which is the temperature of the tap water. When the milk cooling tank 111 needs cold, the compressor 102 is activated. The circulating pump 110 provides a circulation of the water in the second piping circuit 109 between the preheated water tank 112 and the heat recovery unit 106. The water temperature in the second piping circuit 109, measured by the thermostat 113, being lower than a predetermined value, 35°C for example, the water condenser 200 is deactivated by turning off the solenoid valve 204 of the third piping circuit 203.

Referring to figure 8, the thermostatic valve 116 regulates advantageously the hot water flow rate at the outlet 108 of the heat recovery unit 106 in such a manner that the water temperature at its outlet reaches a determined value. The condensing temperature and the condensing pressure increase and the refrigerant fluid circulating in the first piping circuit 101 transfers its heat to the water of the second piping circuit through the heat recovery unit 106 during the desuperheat phase and its condensing latent heat. It should be noted that by turning off the solenoid valve 204, the condensing temperature is increased to a high condensing temperature. Nevertheless, if the condensing temperature reaches a security threshold, the pressure switch 115 turns on the solenoid valve 207 of the by-pass 206 and activates the water condenser 200 by turning on the solenoid valve 204. The activation of the water condenser 200 will decrease the condensing temperature to avoid any deterioration of the refrigeration unit 100 and the type of refrigerant fluid.

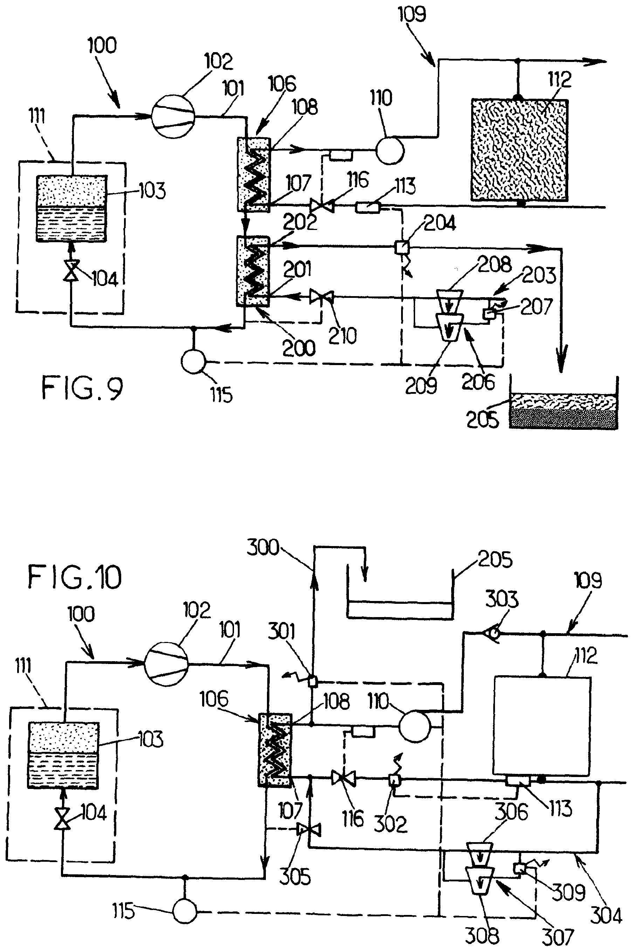

Referring to figure 9, when the temperature of the water filled in the preheated water tank 112 does not provide condensation in the heat recovery unit 106, i.e. when the water reaches a temperature equal to the threshold, about 35°C for example, the thermostat 113 activates the water condenser 200 by turning on the solenoid valve 204 of the third piping circuit 203. In this way, water circulates in the water condenser 200 and the third piping circuit 203 feeds advantageously the drinking trough 205. The pressostatic valve 210 regulates the water flow rate in the water condenser 200 maintaining a low condensing pressure increasing the cooling efficiency and decreasing the power consumption while regulating the water outlet temperature.

For a refrigerant fluid having a high exhaust temperature, such as refrigerant fluid R22 according to the American norm ANSI/ASHRAE 34 published in 2001 "Designation and Safety Classification of Refrigerants", the heat recovery unit 106 provides both the desuperheating of gas and the heating of the water in the preheated water tank 112. For a refrigerant fluid having a low exhaust temperature, such as refrigerant fluid R404A according to the American norm ANSI/ASHRAE 34 published in 2001 "Designation and Safety Classification of Refrigerants", the circulating pump 110 is deactivated because the temperature of the refrigerant fluid does not allow the heating of the water of the preheated tank 112 anymore. When hot water is drawn off the preheated water tank 112, cold water is introduced in the preheated water tank 112 lowering the water temperature in the second piping circuit 109. Even if the water temperature is lower than the predetermined threshold, the thermostat 113 will not deactivate the water condenser 200 by turning off the solenoid valve 204 until a predetermined duration.

In a third embodiment, referring to figure 10, the device according to the invention comprises as the first embodiment a refrigeration unit 100 including at least a first piping closed refrigerating circuit 101 in which a refrigerant fluid circulates, a compressor 102, an evaporator 103, an expansion valve 104 and a heat recovery unit 106 including a water inlet 107 and a water outlet 108 respectively connected to a second piping circuit 109 comprising a circulating pump 110. The evaporator 103 and the expansion valve 104 are embedded in a milk cooling tank 111 which is progressively filled up during cows milking.

Moreover, the second piping circuit 109 comprises a preheated water tank 112 and a thermostat 113, preferably including a timer unit, positioned at the low temperature area of the second piping circuit 109, i.e. between the bottom part of the preheated water tank 112 and the inlet of the heat recovery unit 106.

This embodiment can be distinguished from the first embodiment illustrated on figure 2 by the fact that the air cooled condenser had been deleted. The outlet pipe of the second piping circuit 109 comprises a derivative pipe 300 including a solenoid valve 301 connected to the thermostat 113, said thermostat 113 being also connected to a solenoid valve 302 positioned between said thermostat 113 and the thermostatic valve 116. The derivative pipe 300 feeds at least one drinking trough 205 and the incoming pipe of the second piping circuit 109 comprises a by-pass circuit 304 including a pressostatic valve 305. Accessorily, the outlet pipe of the second piping circuit 109 may comprise a non return valve 303 positioned between the circulating pump 110 and the preheated water tank 112. The incoming pipe of the second piping circuit 109 comprises a filter 306 and a by-pass circuit 307, said by-pass circuit 307 including a second filter 308 and a solenoid valve 309.

Accessorily, the device comprises security means including a pressure switch 115 positioned between the compressor 102 and the expansion valve 104. Said pressure switch 115 is connected to the solenoid valve 309 of the by-bass circuit 307 and to the solenoid valves 301 and 302 of the derivative pipe 300 and respectively the second piping circuit 109.

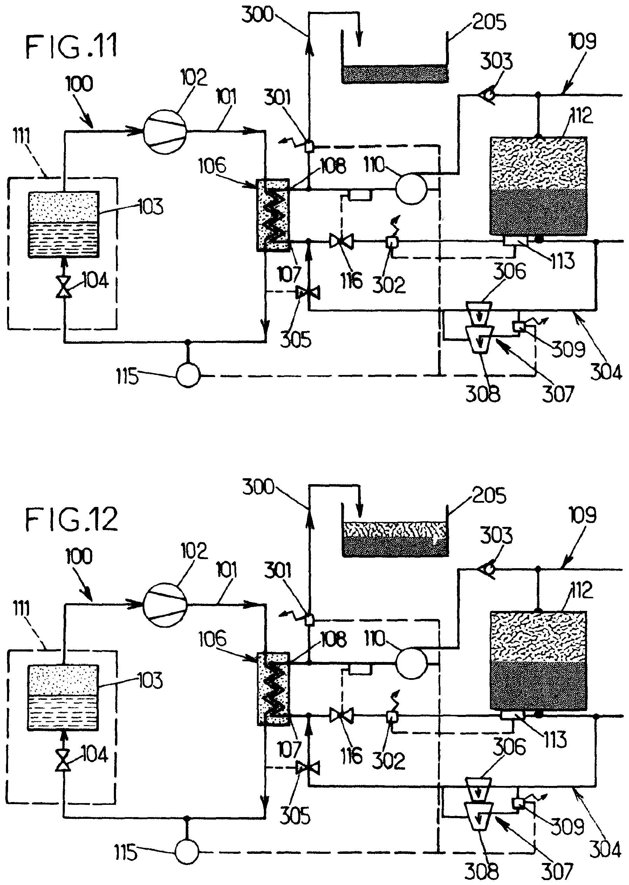

Referring to figure 11, the preheated water tank 112 is filled with a cold water, i.e. the temperature of the water is comprised between 10°C and 18°C which is the temperature of the tap water. When the milk cooling tank 111 needs cold, the compressor 102 is activated. The circulating pump 110 provides a circulation of the water in the second piping circuit 109 between the preheated water tank 112 and the heat recovery unit 106. The thermostatic valve 116 regulates advantageously the hot water flow rate at the outlet 108 of the heat recovery unit 106 in such a manner that the water temperature at its outlet reaches a determined value. The condensing temperature and the condensing pressure increase and the refrigerant fluid circulating in the first piping circuit 101 transfers its heat to the water of the second piping circuit through the heat recovery unit 106 during the desuperheat phase and its condensing latent heat.

Referring to figure 12, when the temperature of the water filled in the preheated water tank 112 does not provide condensation in the heat recovery unit 106, i.e. when the water reaches a temperature equal to the threshold, about 35°C for example, the thermostat 113 turns off the solenoid valve 302 to close the second piping circuit 109 and turns on the solenoid valve 301 of the derivative pipe 300. In the same time, the circulating pump 110 connected to the thermostat 113 is stopped. Consequently, the water circulates in the heat recovery unit 106 which heats said water while condensing the refrigerant fluid. The hot water feeds the drinking trough 205. The pressostatic valve 210 regulates the water flow rate in the heat recovery unit 106 maintaining a low condensing pressure increasing the cooling efficiency and decreasing the power consumption while regulating the water outlet temperature.

When hot water is drawn off the preheated water tank 112, cold water is introduced in the preheated water tank 112 lowering the water temperature in the second piping circuit 109. Even if the water temperature is lower than the predetermined threshold, the thermostat 113 will not activate and/or deactivate the solenoid valves 301 and 302 until a predetermined duration.

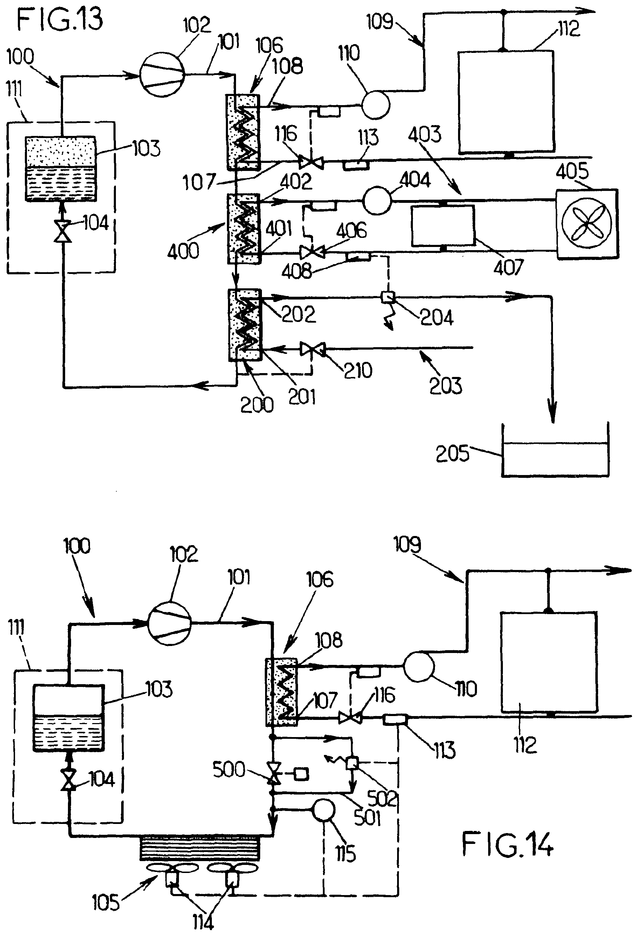

In a fourth embodiment, referring to figure 13, the device according to the invention comprises, as the second embodiment depicted on figure 6, a refrigeration unit 100 including at least a first piping closed refrigerating circuit 101 in which a refrigerant fluid circulates, a compressor 102, an evaporator 103, an expansion valve 104 and a heat recovery unit 106 including a water inlet 107 and a water outlet 108 respectively connected to a second piping circuit 109 comprising a circulating pump 110. The evaporator 103 and the expansion valve 104 are embedded in a milk cooling tank 111 which is progressively filled up during cows milking. The device comprises also a water condenser 200 including a water inlet 201 and a water outlet 202 respectively connected to a third piping circuit 203. Said third piping circuit 203 comprises a solenoid valve 204 positioned at the outlet pipe of the third piping circuit 203, the outlet of the third piping circuit feeding advantageously at least one drinking trough 205. The inlet pipe of the third piping circuit 203 comprises a pressostatic valve 210 suitable to regulate the water flow rate in the water condenser.

Furthermore, said second piping circuit 109 comprises a thermostatic valve 116 that regulates the water flow in such a manner that its temperature at the water outlet 108 is maintained at a predetermined value.

Moreover, the second piping circuit 109 comprises a preheated water tank 112 and a thermostat 113, preferably including a timer unit, positioned at the low temperature area of the second piping circuit 109, i.e. between the bottom part of the preheated water tank 112 and the inlet of the heat recovery unit 106.

This embodiment comprises a second water condenser 400 including a water inlet 401 and a water outlet 402 respectively connected to a fourth piping circuit 403 called heating piping circuit. Said heating piping circuit 403 comprises a circulating pump 404 positioned at the outlet pipe of the fourth piping circuit 403, the outlet of the third piping circuit feeding advantageously an heating system 405. Said heating piping circuit 403 comprises a thermostatic valve 406 suitable to regulate the water flow rate in the second water condenser 400. Moreover, the heating piping circuit 403 comprises a buffering hot water tank 407 and a second thermostat 408, preferably including a timer unit, positioned at the low temperature area of the fourth piping circuit 403, i.e. between the bottom part of the buffering hot water tank 407 and the inlet 401 of the water condenser 400. Said second thermostat 408 is connected to the solenoid valve 204 of the third piping circuit 203 and the first thermostat 113 of the second piping circuit 109 is connected to the circulating pump 404 of the heating piping circuit 403 to pilot it.

In a last embodiment, referring to figure 14, the device according to the invention comprises, as the first embodiment of figure 2, a refrigeration unit 100 including at least a first piping closed refrigerating circuit 101 in which a refrigerant fluid circulates, a compressor 102, an evaporator 103, an expansion valve 104, an air cooled condenser 105 and a heat recovery unit 106 including a water inlet 107 and a water outlet 108 respectively connected to a second piping circuit 109 comprising a circulating pump 110. The evaporator 103 and the expansion valve 104 are embedded in a milk cooling tank 111 which is progressively filled up during cows milking. The hot milk collected in the milk cooling tank 111 is cooled and maintained to a low temperature to avoid any bacterial growth.

Moreover, the second piping circuit 109 comprises a preheated water tank 112 and a thermostat 113, preferably including a timer unit, positioned at the low temperature area of the second piping circuit 109, i.e. between the bottom part of the preheated water tank 112 and the inlet of the heat recovery unit 106. Said thermostat 113 is connected to the motor driven fans 114 of the air cooled condenser 105 to increase/decrease the condensing temperature.

Accessorily, the device comprises security means including a pressure switch 115 positioned between the compressor 102 and the expansion valve 104. Said pressure switch 115 is connected to the motor driven fans 114 of the air cooled condenser 105 in such a manner that the air cooled condenser 105 is activated when the condensing temperature is higher than a security threshold i.e. the motor driven fans 114 are turned on.

Furthermore, said second piping circuit 109 comprises a thermostatic valve 116 that regulates the water flow in such a manner that its temperature at the water outlet 108 is maintained at a predetermined value.

Additionally, the device comprises a pressure regulating valve 500 between the heat recovery unit 106 and the air cooled condenser 105 and a by-pass piping circuit 501 including a solenoid valve 502 piloted by the thermostat 113.

Additional modifications and improvements of the present invention may also be apparent to those of ordinary skill in the art. For example, the thermostat 113 of any embodiment of the present invention may be substituted by a pressure switch positioned at the first piping circuit between the compressor and expansion valve. Thus, the particular combination of parts described and illustrated herein is intended to represent only certain embodiments of the present invention, and is not intended to serve as limitations of alternative devices within the scope of the invention.

## Claims

1. Method for heat recovery on a vapour compression refrigeration system (100) allowing to produce hot water, said refrigeration unit including at least a first piping closed refrigerating circuit (101) in which a refrigerant fluid circulates, a compressor (102), an evaporator (103), an expansion valve (104), a condenser (105,200) and/or a heat recovery (106) unit including a water inlet (107) and a water outlet (108) respectively connected to a second piping circuit (109) including a circulating pump (110), said method comprising at least the steps of entering the refrigerant fluid in a vapour saturated state into the compressor (102), compressing the refrigerant fluid to a higher pressure resulting in a higher temperature, in such a way that the refrigerant fluid is in a superheated vapour state, cooling and condensing the refrigerant fluid in superheated vapour state into a saturated liquid by passing it through the condenser (105,200) and/or heat recovery unit (106), passing the saturated liquid through the expansion valve (104) to reduce abruptly the pressure providing a flash evaporation that lowers the liquid and vapour refrigerant's temperature, passing the liquid and vapour refrigerant through the evaporator (103) to extract the heat from a hot source, said method is **characterized in that** it comprises at least the following steps of:
- determining at least one physical unit of the refrigerant fluid and/or water of the second piping circuit (109),
- when said physical unit is lower than a predetermined threshold, the condensing temperature is increased,
- when said physical unit is greater than said predetermined threshold the condensing temperature is decreased to a minimum value.

2. Method of claim 1 , **characterized in that** when said physical unit is lower than predetermined threshold, the hot water flow rate at the outlet of the heat recovery unit (106) is regulated in such a manner that the water temperature at its outlet reaches a determined value.

3. Method of any claim 1 or 2, **characterized in that** said physical unit is the water temperature at the second water piping circuit (109).

4. Method of any claim 1 or 2, **characterized in that** said physical unit is the refrigerant fluid's pressure.

5. Method of any claim 1 to 4, **characterized in that** the threshold is a water temperature at the second piping circuit (109) comprised between 30 and 4O<0>C.

6. Method of any claim 1 to 5, **characterized in that** the condensing temperature is increased by deactivating the condenser (105,200).

7. Method of any claim 1 to 6, **characterized in that** when said physical unit is greater than said predetermined threshold the condensing temperature is decreased to a minimum value and the condensing temperature is maintained to a minimum value in function of at least one parameter even if said physical unit becomes lower than said predetermined threshold.

8. Device for heat recovery on a vapour compression refrigeration system (100) allowing to produce hot water, said refrigeration unit including at least a first piping closed refrigerating circuit (101) in which a refrigerant fluid circulates, a compressor (102), an evaporator (103), an expansion valve (104), a condenser (105,200) and/or a heat recovery unit (106) including a water inlet (107) and a water outlet (108) respectively connected to a second piping circuit (109) comprising a circulating pump (110), said device is **characterized in that** it comprises at least means (113) for determining at least one physical unit of the refrigerant fluid and/or water of the second piping circuit (109), means for increasing condensing temperature when said physical unit is lower than a predetermined threshold, and means for decreasing the condensing temperature to a minimum value when said physical unit is greater than said predetermined threshold.

9. Device of claim 8, **characterized in that** it comprises means (116) for regulating the hot water flow rate at the outlet of the heat recovery unit in such a manner that the water temperature at its outlet reaches a determined value when said physical unit is lower than predetermined threshold.

10. Device of any claim 8 or 9, **characterized in that** means for determining said physical unit is a thermostat (113) positioned at the low temperature area of the second piping circuit (109).

11. Device of any claim 8 or 9, **characterized in that** means for determining said physical unit is a pressure switch positioned at the first piping circuit (101) between the compressor (102) and expansion valve (104).

12. Device of any claim 8 to 11, **characterized in that** the threshold is a water temperature at the low temperature area of the second piping circuit (109) comprised between 30 and 40<0>C.

13. Device of any claim 8 to 12, **characterized in that** means for increasing and/or decreasing condensing temperature is a switch for activating/deactivating the condenser (105,200).

14. Device of any claim 8 to 13, **characterized in that** it further comprises means for decreasing the condensing temperature to a minimum value when said physical unit is greater than said predetermined threshold and for holding the condensing temperature to a minimum value in function of at least one parameter even if said physical unit becomes lower than said predetermined threshold.

15. Device of claim 14, **characterized in that** said means are a thermostat (113) including a timer unit positioned at the low temperature area of the second piping circuit (109) to maintain the condensing temperature to a minimum value during a predetermined time even if the water temperature becomes lower than said predetermined threshold.

16. Device of claim 15 , **characterized in that** it further comprises a pressure regulating valve (500) between the heat recovery unit (106) and the condenser (105,200) and a by-pass piping circuit (501) including a solenoid valve (502) piloted by the thermostat (113).

## Patentansprüche

1. Verfahren zur Wärmerückgewinnung an einem Dampfkompressionskühlsystem (100), das erlaubt, heißes Wasser zu produzieren, wobei die Kühleinheit mindestens einen ersten Kühlkreislauf mit geschlossener Verrohrung (101), in dem ein Kühlfluid zirkuliert, einen Kompressor (102), einen Verdampfer (103), ein Expansionsventil (104), einen Kühler (105,200) und/oder eine Wärmerückgewinnungseinheit (106) beinhaltet, die einen Wassereinlass (107) und einen Wasserauslass (108), jeweils mit einem zweiten Verrohrungskreislauf (109) verbunden beinhaltet, eine Zirkulationspumpe (110) beinhaltend, wobei das Verfahren mindestens die Schritte des Eintretens des Kühlfluids in den Kompressor (102) in einem dampfgesättigten Zustand, Komprimieren des Kühlfluids auf einen höheren Druck, in einer höheren Temperatur resultierend, auf eine Weise, dass das Kühlfluid sich in einem überhitzten Dampfzustand befindet, Kühlen und Kondensieren des Kühlfluids im überhitzten Dampfzustand in eine gesättigte Flüssigkeit durch Leiten davon durch den Kühler (105,200) und/oder die Wärmerückgewinnungseinheit (106), Leiten der gesättigten Flüssigkeit durch das Expansionsventil (104), um den Druck abrupt zu reduzieren, eine Blitzverdampfung bereitstellend, die die Temperatur des flüssigen und dampfförmigen Kühlmittels verringert, Leiten des flüssigen und dampfförmigen Kühlmittels durch den Verdampfer (103) umfasst, um die Wärme aus eine Wärmequelle zu extrahieren, wobei das Verfahren **dadurch gekennzeichnet ist, dass** es mindestens die folgenden Schritte umfasst:
- Bestimmen mindestens einer physikalischen Einheit des Kühlfluids und/oder Wassers des zweiten Verrohrungskreislaufs (109),
- Steigern der Kondensationstemperatur, wenn die physikalische Einheit niedriger ist als ein vorher festgelegter Schwellenwert,
- Verringern der Kondensationstemperatur auf einen Mindestwert, wenn die physikalische Einheit größer ist als der vorher festgelegter Schwellenwert.

2. Verfahren nach Anspruch 1, **dadurch gekennzeichnet, dass**, wenn die physikalische Einheit niedriger ist als ein vorher festgelegter Schwellenwert, die Durchflussrate des heißen Wassers an dem Auslass der Wärmerückgewinnungseinheit (106) auf eine solche Weise reguliert wird, dass die Wassertemperatur an ihrem Auslass einen festgelegten Wert erreicht.

3. Verfahren nach einem Anspruch 1 oder 2, **dadurch gekennzeichnet, dass** die physikalische Einheit die Wassertemperatur im zweiten Wasserverrohrungskreislauf (109) ist.

4. Verfahren nach Anspruch 1 oder 2, **dadurch gekennzeichnet, dass** die physikalische Einheit der Druck des Kühlfluids ist.

5. Verfahren nach einem Anspruch 1 bis 4, **dadurch gekennzeichnet, dass** der Schwellenwert eine Wassertemperatur in dem zweiten Verrohrungskreislauf (109), umfasst zwischen 30 und 4O<0>C, ist.

6. Verfahren nach einem Anspruch 1 bis 5, **dadurch gekennzeichnet, dass** die Kondensationstemperatur durch Deaktivieren des Kühlers (105,200) gesteigert wird.

7. Verfahren nach einem Anspruch 1 bis 6, **dadurch gekennzeichnet, dass**, wenn die physikalische Einheit größer ist als der vorher festgelegte Schwellenwert, die Kondensationstemperatur auf einen Mindestwert verringert wird und die Kondensationstemperatur in Funktion von mindestens einem Parameter bei einem Mindestwert gehalten wird, sogar wenn die physikalische Einheit niedriger wird als der vorher festgelegte Schwellenwert.

8. Vorrichtung zur Wärmerückgewinnung an einem Dampfkompressionskühlsystem (100), die erlaubt, heißes Wasser zu produzieren, wobei die Kühleinheit mindestens einen ersten Kühlkreislauf mit geschlossener Verrohrung (101), in dem ein Kühlfluid zirkuliert, einen Kompressor (102), einen Verdampfer (103), ein Expansionsventil (104), einen Kühler (105,200) und/oder eine Wärmerückgewinnungseinheit (106) beinhaltet, beinhaltend einen Wassereinlass (107) und einen Wasserauslass (108), jeweils verbunden mit einem zweiten Verrohrungskreislauf (109), umfassend eine Zirkulationspumpe (110), wobei die Vorrichtung **dadurch gekennzeichnet ist, dass** sie mindestens Mittel (113) zum Bestimmen mindestens einer physikalischen Einheit des Kühlfluids und/oder Wassers des zweiten Verrohrungskreislaufs (109), Mittel zum Steigern der Kondensationstemperatur, wenn die physikalische Einheit niedriger ist als ein vorher festgelegter Schwellenwert, und Mittel zum Verringern der Kondensationstemperatur auf einen Mindestwert, wenn die physikalische Einheit größer ist als der vorher festgelegte Schwellenwert, umfasst.

9. Vorrichtung nach Anspruch 8, **dadurch gekennzeichnet, dass** sie Mittel (116) zum Regulieren der Durchflussrate des heißen Wassers an dem Auslass der Wärmerückgewinnungseinheit auf eine solche Weise umfasst, dass die Wassertemperatur an ihrem Auslass einen festgelegten Wert erreicht, wenn die physikalische Einheit niedriger ist als ein vorher festgelegter Schwellenwert.

10. Vorrichtung nach Anspruch 8 oder 9, **dadurch gekennzeichnet, dass** das Mittel zum Bestimmen der physikalischen Einheit ein am Niedrigtemperaturbereich des zweiten Verrohrungskreislaufs (109) positionierter Thermostat (113) ist.

11. Vorrichtung nach Anspruch 8 oder 9, **dadurch gekennzeichnet, dass** das Mittel zum Bestimmen der physikalischen Einheit ein an dem ersten Verrohrungskreislauf (101) zwischen dem Kompressor (102) und dem Expansionsventil (104) positionierter Druckschalter ist.

12. Verfahren nach einem Anspruch 8 bis 11, **dadurch gekennzeichnet, dass** der Schwellenwert eine Wassertemperatur in dem Niedrigtemperaturbereich des zweiten Verrohrungskreislaufs (109), umfasst zwischen 30 und 40<0>C, ist.

13. Vorrichtung nach einem Anspruch 8 bis 12, **dadurch gekennzeichnet, dass** das Mittel zum Steigern und/oder Verringern der Kondensationstemperatur ein Schalter zum Aktivieren/Deaktivieren des Kühlers (105,200) ist.

14. Vorrichtung nach einem Anspruch 8 bis 13, **dadurch gekennzeichnet, dass** sie weiter Mittel zum Verringern der Kondensationstemperatur auf einen Mindestwert, wenn die physikalische Einheit größer ist als der vorher festgelegte Schwellenwert, und zum Halten der Kondensationstemperatur auf einem Mindestwert in Funktion von mindestens einem Parameter, umfasst, sogar wenn die physikalische Einheit niedriger wird als der vorher festgelegte Schwellenwert.

15. Vorrichtung nach Anspruch 14, **dadurch gekennzeichnet, dass** die Mittel ein Thermostat (113), beinhaltend eine an dem Niedrigtemperaturbereich des zweiten Verrohrungskreislaufs (109) positionierte Zeitmesseinheit, sind, um die Kondensationstemperatur während einer vorher festgelegten Zeitdauer bei einem Mindestwert zu halten, sogar wenn die Wassertemperatur niedriger wird als der vorher festgelegte Schwellenwert.

16. Vorrichtung nach Anspruch 15, **dadurch gekennzeichnet, dass** sie weiter ein Druckregulierungsventil (500) zwischen der Wärmerückgewinnungseinheit (106) und dem Kühler (105,200) und einen Bypass-Verrohrungskreislauf (501) umfasst, beinhaltend ein magnetisches Ventil (502), das durch den Thermostat (113) gesteuert wird.

## Revendications

1. Procédé de récupération de chaleur sur un système de réfrigération par compression de vapeur (100) permettant de produire de l'eau chaude, ladite unité de réfrigération comprenant au moins un circuit de réfrigération fermé de première canalisation (101) dans lequel un fluide réfrigérant circule, un compresseur (102), un évaporateur (103), une vanne d'expansion (104), un condenseur (105, 200) et/ou une unité de récupération de chaleur (106) comprenant une entrée d'eau (107) et une sortie d'eau (108) respectivement raccordées à un second circuit de canalisation (109) comprenant une pompe de circulation (110), ledit procédé comprenant au moins les étapes d'entrée du fluide réfrigérant dans un état saturé en vapeur dans le compresseur (102), de compression du fluide réfrigérant à une pression plus élevée entraînant une température plus élevée de manière que le fluide réfrigérant soit dans un état de vapeur surchauffée, de refroidissement et de condensation du fluide réfrigérant à l'état de vapeur surchauffée dans un liquide saturé en le faisant passer à travers le condenseur (105, 200) et/ou l'unité de récupération de chaleur (106), en faisant passer le liquide saturé à travers la vanne d'expansion (104) pour réduire de manière abrupte la pression en fournissant une évaporation éclair qui abaisse la température du réfrigérant à l'état liquide et à l'état de vapeur, en faisant passer le réfrigérant liquide et de la vapeur à travers l'évaporateur (103) pour extraire la chaleur d'une source chaude, ledit procédé étant **caractérisé en ce qu'**il comprend au moins les étapes suivantes consistant à :
- déterminer au moins une unité physique du fluide réfrigérant et/ou de l'eau du second circuit de canalisation (109),
- lorsque ladite unité physique est inférieure à un seuil prédéterminé, la température de condensation est augmentée,
- lorsque ladite unité physique est supérieure audit seuil prédéterminé, la température de condensation est réduite à une valeur minimale.

2. Procédé selon la revendication 1, **caractérisé en ce que**, lorsque ladite unité physique est inférieure au seuil prédéterminé, le débit d'eau chaude à la sortie de l'unité de récupération de chaleur (106) est régulé de manière que la température de l'eau à sa sortie atteigne une valeur déterminée.

3. Procédé selon l'une quelconque des revendications 1 ou 2, **caractérisé en ce que** ladite unité physique est la température de l'eau dans le second circuit de canalisation d'eau (109).

4. Procédé selon l'une quelconque des revendications 1 ou 2, **caractérisé en ce que** ladite unité physique est la pression du fluide réfrigérant.

5. Procédé selon l'une quelconque des revendications 1 à 4, **caractérisé en ce que** le seuil est une température de l'eau dans le second circuit de canalisation (109) comprise entre 30 et 40 °C.

6. Procédé selon l'une quelconque des revendications 1 à 5, **caractérisé en ce que** la température de condensation est augmentée en désactivant le condenseur (105, 200).

7. Procédé selon l'une quelconque des revendications 1 à 6, **caractérisé en ce que**, lorsque ladite unité physique est supérieure audit seuil prédéterminé, la température de condensation est réduite à une valeur minimale et la température de condensation est maintenue à une valeur minimale en fonction d'au moins un paramètre même si ladite unité physique devient inférieure audit seuil prédéterminé.

8. Dispositif de récupération de chaleur sur un système de réfrigération par compression de vapeur (100) permettant de produire de l'eau chaude, ladite unité de réfrigération comprenant au moins un circuit de réfrigération fermé de première canalisation (101), dans lequel un fluide réfrigérant circule, un compresseur (102), un évaporateur (103), une vanne d'expansion (104), un condenseur (105, 200) et/ou une unité de récupération de chaleur (106) comprenant une entrée d'eau (107) et une sortie d'eau (108) respectivement raccordées à un second circuit de canalisation (109) comprenant une pompe de circulation (110), ledit dispositif étant **caractérisé en ce qu'**il comprend au moins des moyens (113) pour déterminer au moins une unité physique du fluide réfrigérant et/ou de l'eau du second circuit de canalisation (109), des moyens pour augmenter la température de condensation lorsque ladite unité physique est inférieure à un seuil prédéterminé et des moyens pour réduire la température de condensation à une valeur minimale lorsque ladite unité physique est supérieure audit seuil prédéterminé.

9. Dispositif selon la revendication 8, **caractérisé en ce qu'**il comprend des moyens (116) pour réguler le débit d'eau chaude à la sortie de l'unité de récupération de chaleur de manière que la température de l'eau à sa sortie atteigne une valeur déterminée lorsque ladite unité physique est inférieure à un seuil prédéterminé.

10. Dispositif selon l'une quelconque des revendications 8 ou 9, **caractérisé en ce que** les moyens pour déterminer ladite unité physique sont constitués par un thermostat (113) positionné dans la zone de basse température du second circuit de canalisation (109).

11. Dispositif selon l'une quelconque des revendications 8 ou 9, **caractérisé en ce que** les moyens pour déterminer ladite unité physique sont constitués par un commutateur de pression positionné dans le premier circuit de canalisation (101) entre le compresseur (102) et la vanne d'expansion (104).

12. Dispositif selon l'une quelconque des revendications 8 à 11, **caractérisé en ce que** le seuil est une température de l'eau dans la zone de basse température du second circuit de canalisation (109) comprise entre 30 et 40 °C.

13. Dispositif selon l'une quelconque des revendications 8 à 12, **caractérisé en ce que** les moyens pour augmenter et/ou réduire la température de condensation sont constitués par un commutateur permettant d'activer/désactiver le condenseur (105, 200).

14. Dispositif selon l'une quelconque des revendications 8 à 13, **caractérisé en ce qu'**il comprend en outre des moyens pour réduire la température de condensation à une valeur minimale, lorsque ladite unité physique est supérieure audit seuil prédéterminé et pour maintenir la température de condensation à une valeur minimale en fonction d'au moins un paramètre même si ladite unité physique devient inférieure audit seuil prédéterminé.

15. Dispositif selon la revendication 14, **caractérisé en ce que** lesdits moyens sont constitués d'un thermostat (113) comprenant une unité de minuterie positionnée dans la zone de basse température du second circuit de canalisation (109) pour maintenir la température de condensation à une valeur minimale au cours d'une période prédéterminée même si la température de l'eau devient plus faible que ledit seuil prédéterminé.

16. Dispositif selon la revendication 15, **caractérisé en ce qu'**il comprend en outre une vanne régulatrice de pression (500) entre l'unité de récupération de chaleur (106) et le condenseur (105, 200) et un circuit de canalisation de dérivation (501) comprenant une électrovanne (502) pilotée par le thermostat (113).
